# EUROPEAN PATENT SPECIFICATION

(11) **EP 2 202 937 B1**
(45) Date of publication and mention of the grant of the patent: **30.11.2011**
(21) Application number: 08306017.8
(22) Date of filing: 24.12.2008
(51) Int. Cl.: H04L 29/06

(54) **Partial reassembly for pattern matching**
Partieller Wiederzusammenbau zum Mustervergleich
Réassemblage partiel pour la correspondance de motifs

(43) Date of publication of application: 30.06.2010
(73) Proprietor: Mitsubishi Electric R&D Centre Europe B.V., 1119 NS Schiphol Rijk (NL); MITSUBISHI ELECTRIC CORPORATION, Chiyoda-ku Tokyo 100-8310 (JP)
(72) Inventor: Rollet, Romain, 35700 Rennes (FR); Foube, Laurent, 35340 Liffre (FR)
(74) Representative: Cabinet Plasseraud

(56) References cited:
- US-A1- 2004 042 458
- US-A1- 2006 198 375

## Description

### BACKGROUND OF THE INVENTION

### 1. Technical Field

The present invention relates generally to processing received data segments through a network, and more particularly to managing them for their transmission to an application.

### 2. Related Art

In order to carry out some applications at terminal level, like applications based on network analysis, a preliminary content analysis of Protocol Data Unit (PDU) at different levels of a network stack can be required.

These applications can correspond to an IDS application (for 'Intrusion Detection System') or an IPS application (for 'Intrusion Prevention System'). These applications are useful to look for virus or attacks signatures. They can be located above a transport protocol stack, like for instance a connection-oriented protocol (TCP for 'Transmission Control Protocol') or a connection-less protocol (UDP for 'User Datagram Protocol').

Some data relative to any application transmitted through a network can be spread in several data segments because of the TCP segmentation and/or IP fragmentation. Indeed, depending on the size of data to be transmitted, the IP layer can fragment an IP datagram which is then transported in several Ethernet packets. Such a fragmentation can be occurred during routing by intermediate equipments.

When a segmentation or fragmentation method is applied to data to be transmitted through a network, ordered sequence numbers are respectively associated to data segments. But, the data segments can be received in an order different from the order indicated by their sequence numbers. The difference of data segment order between the transmission side and the reception side may occur because of re-emission of non acknowledged data segments, for instance when TCP protocol is used, or because of different transit time depending on paths inside the network. Moreover, the number of received data segments may differ from the number of transmitted data segments.

All these characteristics can make a content analysis of received PDU very complicated, because, notably, it can be required to form the original sent message, meaning TCP stream or UDP datagram. For that purpose, an IP defragmentation step and a data re-assembly step can be performed on received data segments, notably when TCP protocol is used.

An IP defragmentation step allows reconstructing the entire IP datagram which can be sent to the upper layer (TCP or UDP). A data re-assembly step allows, in the same way, to deliver the data segments in order to rebuild the initial transmitted data stream.

On the receiver side, such defragmentation and re-assembly steps are costly regarding memory usage. Moreover, generally, the re-assembly step is in charge of waiting all consecutive data segments before transmitting them to the upper layer. Thus, when some data segments are not yet received, the re-assembly step waits for their reception before transmitting a complete data stream to the upper layer. In these conditions, unfortunately, in some situations, bursts of transmission to the upper layer can occur.

Document US 2006/0198375 describes a method for pattern matting using pocket reassembly. Document US 2004/0042458 describes a system for trandling out- of-order frames.

### SUMMARY OF THE INVENTION

In view of the foregoing, there is a need for transmitting ordered data segments to an upper applicative layer, while avoiding burst of transmission and while saving memory space.

In a first aspect, the invention proposes a method (as in claim 1) of transmitting received data segments from a lower layer to an upper layer in a protocol stack, data segments being respectively associated to sequence numbers ordering them;
said upper layer being adapted to handle K consecutive bytes of data; K being a positive integer;
said method comprising the next steps:
/a/ receiving a current data segment;
/b/ if the data segment preceding the current data segment is not yet received, storing in memory the first K-1 bytes of said current data segment in association with said current data segment; and
   if the data segment next to the current data segment is not yet received, storing a specific information relative to the last K-1 bytes of said current data segment in association with said current data segment;
/c/ transmitting said current data segment to the upper layer;
   wherein said current data segment is transmitted with the first K-1 bytes stored in association with the next data segment if already received, and with said specific information stored in association with the preceding data segment if already received.

The terms 'data segment' correspond to any part of data used for transmission in a network, and can be obtained notably by segmentation process or fragmentation process.

These features allow, advantageously, transmitting to the upper layer any data segment as soon as it is received. Indeed, in this context, an upper layer requires to have at least K bytes to be able to apply its treatment. For instance, this upper layer can be an applicative layer, which is able to apply a pattern matching application on at least K bytes of data, K being the length of the longest characters string to be found.

More precisely, thanks to this storage structure, the first K-1 bytes of a data segment, which is transmitted to the upper layer, are kept in memory. Thus, even if some data segments are transmitted to the upper layer, while some previous ones are not yet received, the upper layer is able to apply its treatment because, when the missing data segment will be received, the consecutive K-1 bytes will be transmitted again with this new data segment. Thus, the upper layer will be able to apply its treatment continuously, even if the data segments are not transmitted sequentially regarding the sequence number, meaning regarding the initial order of transmission. Stated otherwise, such characteristics allow transmitting data segments as soon as they are received, even if they are not received consecutively. Such processing allows the upper layer to apply its treatment continuously, even if the data segments are not received sequentially.

Indeed, when a new data segment is received just after a data segment already received, the specific information, which is associated to the data segment already received, is transmitted in the same time with the new received data segment. In one embodiment of the present invention, the specific information can correspond to the last K-1 bytes of a data segment, in another embodiment, the specific information can correspond to a state vector value. In this last case, the upper layer can be in charge of carrying out a pattern matching algorithm based on deterministic or non deterministic finite automata with a state vector. When a data segment is received at the upper layer according to the present invention, a new state vector value is obtained and transmitted to the lower layer to be stored.

In these conditions, no burst of transmission to the upper layer can occur because data segments are transmitted as soon as they are received. Moreover, memory space is saved because it is no more required to store all data segments of a reception window until a complete reception of them.

In addition, the managing of memory space is easy because the data buffers used to store data have a fixed size, which is K-1 bytes, which is easier to handle than managing data buffers of variable size.

In one embodiment, at step /b/, the specific data relative to one data segment correspond to the last K-1 bytes of said data segment.

Here, advantageously, the K-1 bytes of a received data segment are stored when the next data segment is not yet received, to be able to send them in association with the next data segment when this last one will be received. The upper layer can apply a K bytes treatment continuously.

In one embodiment, to store the first and the last K-1 bytes of the current data segment, a storage structure is created upon detection of a group of data segment(s) between two missing data segments;
said storage structure comprising:
- a field indicating a pointer to a data buffer storing the K-1 first bytes of the group of segments;
- a field indicating a pointer to a data buffer storing the K-1 last bytes of the group of segments;
- a field indicating a sequence number of the first byte of said group of segment(s);
- a field indicating a length value of the group of segment(s); and
- a field indicating a pointer to a next storage structure corresponding to a next group of segment(s).

This storage structure is advantageously adapted to keep an efficient representation of a reception window of the lower layer, in order to make this lower layer able to apply the main steps of the method.

A reception window of the lower layer can be represented through a chained list of the storage structures, a storage structure being associated to a group of segment(s).

The storage structures in the chained list are updated upon reception of each data segment.

If a new received data segment is located just before or after a group of segment(s), the storage structure of said group of segment(s) is updated. The term 'group of segments' correspond to a group of segments, which can include only one segment, and which is preceded by at least one segment not yet received in the reception window.

In one embodiment, when the upper layer carries out a pattern matching algorithm based on a state vector of deterministic or non deterministic finite automata, the specific information is a state vector value, which is received at the lower layer from the upper layer.

In one embodiment, a storage structure is created upon detection of a group of data segment(s) between two missing data segments;
said storage structure comprising:
- a field (31) indicating a pointer to a data buffer storing the K-1 first bytes of the group of segments;
- a field indicating a state vector value of the automata in association with said group of segments;
- a field (33) indicating a sequence number of the first byte of said group of segment(s);
- a field (34) indicating a length value of the group of segment(s); and
- a field (35) indicating a pointer to a next storage structure corresponding to a next group of segment(s).

In one embodiment, at step /c/, the sequence number of the current data segment can be further transmitted to the upper layer.

This feature can be very advantageously when the upper layer carries out an application which is based on the location of data in the reception window.

In a second aspect, the invention proposes a terminal adapted to receive data through a transmission network, said terminal comprising a protocol stack (as in claim 10), comprising a lower layer and an upper layer, said lower layer being adapted to transmit received data segments to said upper layer, data segments being respectively associated to sequence numbers ordering them;
said upper layer being adapted to handle K consecutive bytes of data; K being a positive integer;
said lower layer comprising:
- a receiver adapted to receive a current data segment;
- a data buffer adapted to store the first K-1 bytes of said current data segment in association with said current data segment; if the data segment preceding the current data segment is not yet received;
- a data buffer adapted to store a specific information relative to the last K-1 bytes of said current data segment in association with said current data segment, if the data segment next to the current data segment is not yet received;
- a transmitter adapted to transmit said current data segment to the upper layer;
wherein said current data segment is transmitted with the first K-1 bytes stored in association with the next data segment if already received and with said specific information stored in association with the preceding data segment if already received.

The specific information can be the K-1 bytes of the corresponding data segment. Then, the data buffer can be adapted to store, if the data segment next to the current data segment is not yet received, the last K-1 bytes of said current data segment in association with said current data segment; and the transmitter can be adapted to transmit the current data segment with the last K-1 bytes stored in association with the preceding data segment, if already received.

Alternatively, the upper layer can carry out a pattern matching algorithm based on a state vector of deterministic or non deterministic finite automata, and the specific information is a state vector value, which is received at the lower layer from the upper layer.

This state vector value is computed by the upper layer and transmitted to the lower layer.

In a third aspect, the present invention proposes a terminal adapted to receive data through a transmission network, said terminal comprising a protocol stack according to the second aspect.

### BRIEF DESCRIPTION OF THE DRAWINGS

Further features and advantages of the present invention will become more apparent from the description below. The latter is given purely by way of illustration and should be read in conjunction with the appended drawings, of which:
- Figure 1 illustrates a protocol stack wherein one embodiment of the present invention can be advantageously carried out;
- Figure 2 illustrates main steps of a method according to one embodiment of the present invention;
- Figure 3 illustrates a storage structure according to one embodiment of the present invention;
- Figures 4-9 illustrate an application of a method according to one embodiment of the present invention, in different cases of data segment reception;
- Figures 10 and 11 illustrate a transmission of a received data segment from a lower layer to an upper layer according to one embodiment of the present invention;
- Figure 12 illustrates a terminal including a protocol stack according to one embodiment of the present invention.

### DESCRIPTION OF PREFERRED EMBODIMENTS

One embodiment of the present invention can be advantageously carried out for pattern matching applications, which are based on re-assembled data. The pattern matching can be done either by looking for regular expressions or exact text strings inside received data.

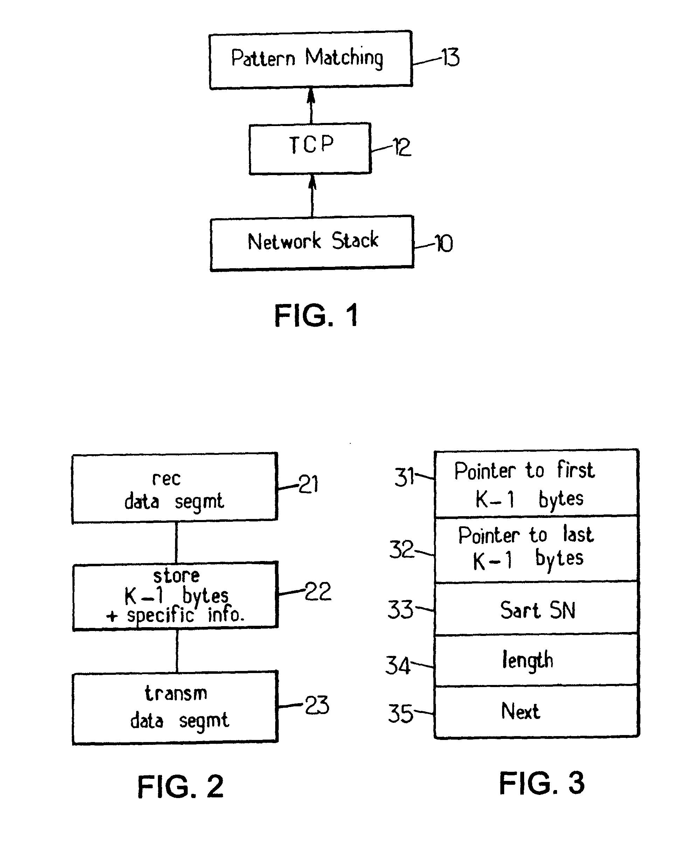

Figure 1 illustrates a protocol stack wherein one embodiment of the present invention can be advantageously carried out.

Such a protocol stack includes, as a lower layer 10, which can be a network stack like Ethernet and IP (for 'Internet Protocol'). A transport layer 11, like a TCP layer (for 'Transmission Control Protocol'), is located above this layer 10, and which is referred as a lower layer. An upper applicative layer 13 is located above this transport layer 11. This upper layer 13 can correspond to a pattern matching application. One embodiment of the present invention can be carried out inside the TCP layer 11.

Figure 2 illustrates main steps of the method according to one embodiment of the present invention.

According to one embodiment of the present invention, an image of a reception window is kept in memory thanks to a specific storage structure. When a current data segment is received at step 21, if the preceding one is not yet received, then the first K-1 bytes of the received current data segment are stored and a specific information relative to the last K-1 bytes of the received current data segment is stored if the next one is not yet received, at step 22. Then, this current received data segment is transmitted to the upper layer, at step 23. Advantageously, to make the upper layer able to apply a correct treatment, the data segment is transmitted in association with the first K-1 bytes of the next data segment, if this last one is already received, and with the specific information if the previous data segment is already received.

Thanks to the characteristics, it is possible to transmit each data segment as soon as it is received, while making the upper layer able to process received data in a relevant way.

Figure 3 illustrates a data storage structure according to one embodiment of the present invention.

A data storage structure used to represent an image of a reception window according to one embodiment of the present invention includes the next fields:
- a field 31 to store a sequence number of the first byte of a group of segments;
- a field 32 to store a length value of the group of segments;
- a field 33 to store a pointer to a data buffer storing K-1 first bytes of the group of segments;
- a field 34 to store a pointer to a data buffer storing K-1 last bytes of the group of segments; and
- a field 35 to store a pointer 'Next' to point to a next storage structure, if necessary.

Using such a storage structure allows transmitting all received data segments as soon as they are received without waiting for missing ones. Indeed, when a group of segments is detected, such a storage structure is created. When a missing data segment is received latter, it can be transmitted associated with the K-1 bytes which are located before and the K-1 bytes which are located after, according to their respective sequence numbers, in order to allow the upper layer to apply its treatment on K bytes at least.

The reception window of the lower layer can be delimited, on one hand, by a Bottom of Window (BoW) which is the sequence number of the first byte that was not received yet by the receiver, meaning by the considered terminal, and, on the other hand, by a Top of Window (ToW) which can be defined relatively to the BoW by adding to the BoW the required size of the window.

In one embodiment of the present invention, even if there is no hole in the reception window, meaning no missing data segment part, at least one storage structure, as defined above, is required to store a pointer to a data buffer. This data buffer stores the K-1 bytes associated with the sequence numbers comprise between the sequence number of the first byte of BoW and the preceding K-1 bytes, meaning last K-1 bytes of the last data segment which was previously in the reception window.

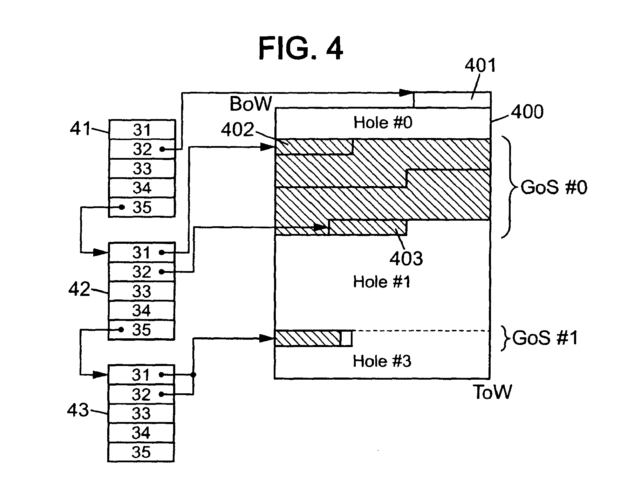

Figure 4 illustrates a using of data storage structures according to one embodiment of the present invention.

The next sections are applied to a TCP connexion, even if one embodiment of the present invention can be advantageously applied to any other protocol.

This Figure 4 illustrates a status of a reception window 400 wherein some data segments are indicated as received and other ones are indicated as missing. The received data segments are illustrated with striped surface and the missing data segments are illustrated with blank surface. Each missing data segments part are referred as hole.

The terms Group of Segments, GoS, correspond to a group of consecutive received data segments between two holes. The illustrated received window 400 contains a first GoS, referred as GoS #0, and a second GoS, referred as GoS #1.

Three different holes are illustrated in the reception window 400, hole #0, hole #1 and hole #2.

According to the present invention, an image of this reception window 400 is stored through a chain of data storage structures 41, 42, 43. The first data storage structure 41 contains:
- a pointer to a buffer wherein are stored the last K-1 bytes 401 of data already transmitted to the upper layer;
- the sequence number associated to the first byte of the GoS previously transmitted;
- the length of the GoS #0; and
- a pointer to the next data storage structure, meaning a storage structure 42.

The second data storage structure 42 contains:
- a pointer to a buffer wherein are stored the first K-1 bytes of the GoS#0,
- a pointer to a buffer wherein are stored the last K-1 bytes of the GoS#0,
- the sequence number associated to the first byte of the GoS#0;
- the length of the GoS#0;
- a pointer to the next data storage structure, meaning a storage structure 43.

The third data storage structure 43 contains:
- two pointers to a buffer wherein are stored the first K-1 bytes of the GoS#1,
- the sequence number associated to the first byte of the GoS#1; and
- the length of the GoS#1.

The GoS#1 contains less than K-1 bytes. Consequently, both first pointers of the data storage structure are the same one.

Advantageously, according to one embodiment of the present invention, on one hand, all received data segments can be transmitted to the upper layer as soon as they are received, and, on the other hand, the reception window is stored through a chained list of storage structures which allows saving memory space.

Using this type of storage structure allows storing an image of the reception window without taking a lot of memory space because it avoids storing all data segments already received. Indeed, only the first K-1 bytes and the last K-1 bytes of each Group of Segments, meaning only the K-1 bytes which are ordered before the missing data segments and after the missing data segments, are stored in a data buffer. This storage allows the upper layer to apply a continuous treatment, when data segments are transmitted as soon as they are received even if some of them are missing.

When the reception window presents such a status, it means that the data comprised in the GoS#0 and GoS#1 have already been transmitted to the upper layer even if some segments are missing in hole #0, hole #1 and hole #3. The first K-1 bytes and the last K-1 bytes of each GoS, already transmitted, are stored in memory. In this condition, it is possible to transmit to the upper layer the first K-1 bytes when the missing segment just before these first K-1 bytes will be received, in the hole #0, and the last K-1 bytes when the missing segment just after these last K-1 bytes will be received, in hole #1.

When a Group of Segments has a size lower than K bytes, the storage structure keeps a pointer to a data buffer storing a copy of all the bytes of the group of segments. Indeed, in this case, first K-1 bytes and last K-1 bytes are identical, and the two pointers point on the same copy data buffer. Here, the field length indicates the number of bytes stored.

In one embodiment, a list of linked storage structures is created for each opened TCP connection.

Next figures illustrate a processing of received data segments according to one embodiment of the present invention, in different cases of reception of a missing data segment.

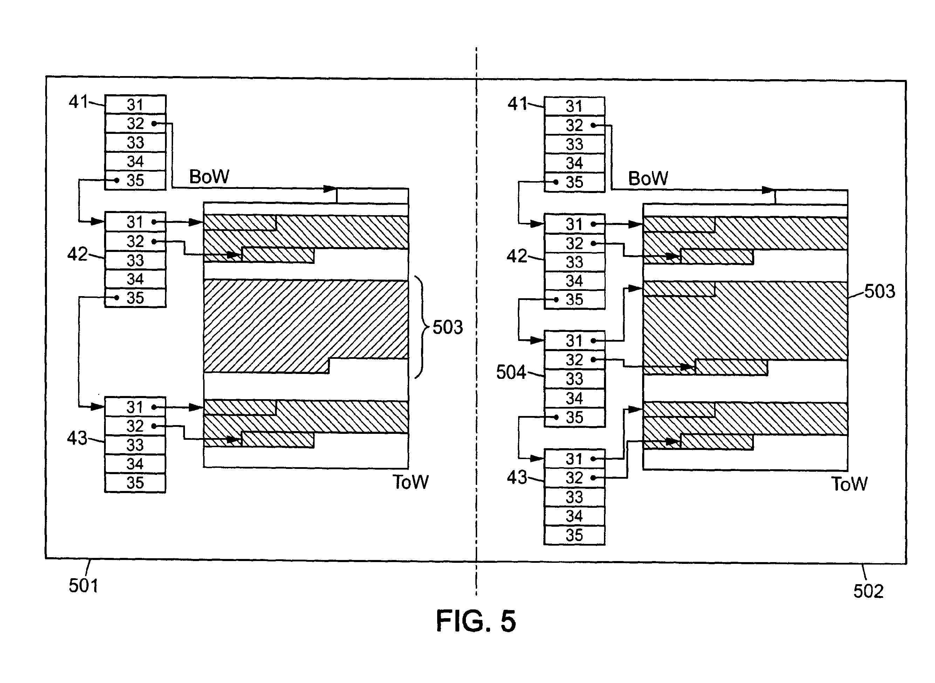

Figure 5 illustrates a reception of an isolated missing data segment according to one embodiment.

A missing data segment 503 is received as an isolated data segment in the image of the reception window. In this case, the new received data segment cannot be added to an existing GoS ('Group of Segment(s)').

Figure 5 contains a first part 501 which illustrates a reception of the data segment 503, and a second part 502 which illustrates the linked storage structures updated upon this reception according to the present invention.

When the isolated data segment 503 is received, a new storage structure 504 is created. The term 'isolated data segment' means a data segment which is received in a hole of a representation of the reception window, and which cannot be added to an existing storage structure because the associated sequence number(s) is not consecutive with a data segment of an existing group of segment already received in the reception window.

This new storage structure is included in the existing chained list of storage structures. The next pointer of the storage structure 42 points to the new storage structure 504 and the next pointer of the new storage structure 504 points to the storage structure 43. Moreover, the other fields of the storage structure 504 are filled in as described above. In this condition, the data segment 503 can be transmitted to the upper layer while allowing the upper layer applying a continuous treatment on K bytes like a pattern matching treatment, because the K-1 first bytes and the K-1 last bytes of the received data segment are kept in memory. Indeed, when the data segment just before the data segment 503 will be received, it will be transmitted to the upper layer with the first K-1 bytes pointed by the storage structure 504. When the data segment just after the data segment 503 will be received, it will be transmitted to the upper layer with the last K-1 bytes pointed by the storage structure 504. Thus, the upper layer is able to carry out a relevant pattern matching algorithm on K bytes as described above.

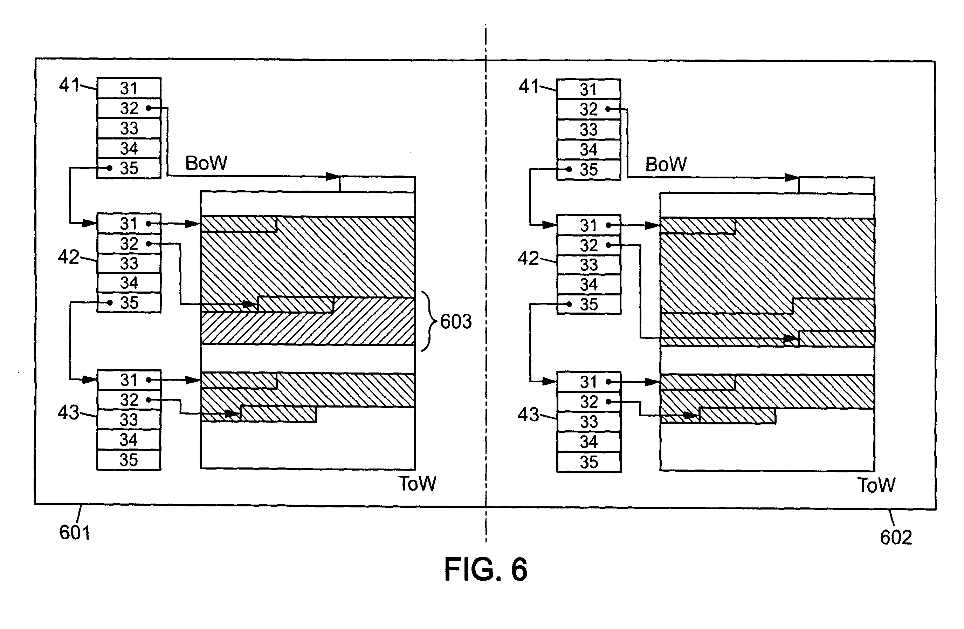

In another case, a new received data segment 603 can be concatenated to the last byte of an existing GoS, as illustrated in Figure 6. In Figure 6, a first part 601 illustrates the new status of the reception window and a second part 602 illustrates the chained list of storage structures updated according to one embodiment of the present invention.

For instance, this new received data segment can be located at the top of the reception window; or it can be located between two GoS already received without filling completely the hole between them; or it can be added to the last data segment received in the reception window. In these cases, the new received data segment can be included in an existing GoS.

In the illustrated case, the already created storage structure 42 is updated. After updating, the field 32 of the storage structure 42 points to a copy of the last K-1 bytes of the new received data segment. The length field of the storage structure is updated too.

Moreover, in this case, the new received data segment 603 is transmitted to the upper layer. To make this upper layer able to apply a relevant content analysis based on K bytes, the data segment is transmitted associated to the last K-1 bytes stored in the data buffer pointed by the storage structure 42. Stated otherwise, these last K-1 bytes are concatenated to the data segment 603 and the result is transmitted to the upper layer.

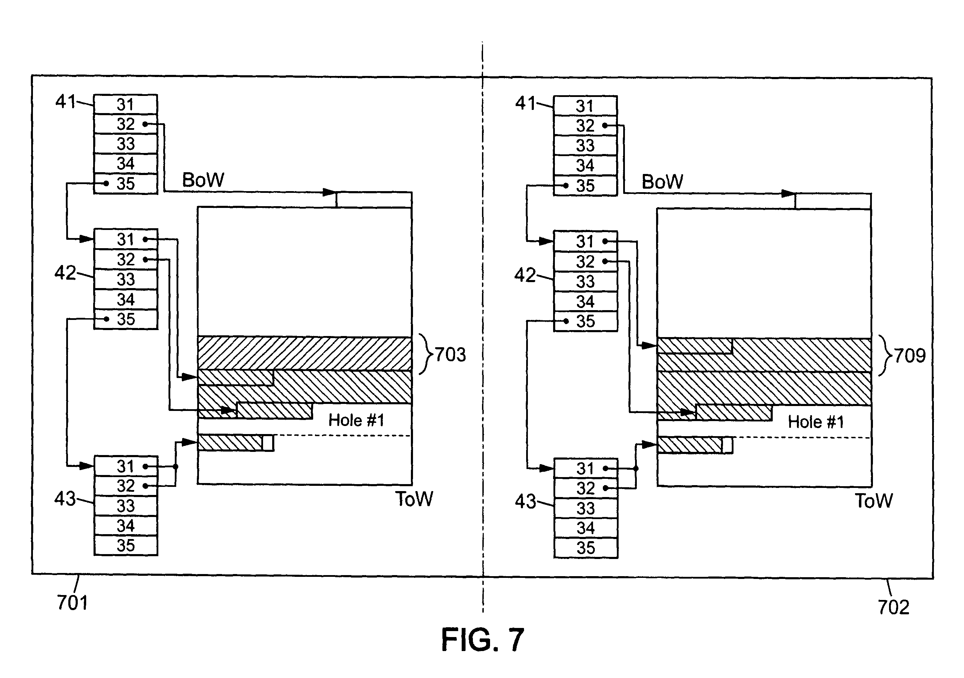

Figure 7 illustrates a similar case wherein the new received data segment 703 can be concatenated with the first byte of an existing GoS, according to their respective sequence numbers. A first part 701 illustrate a reception of this new data segment and a second part 702 illustrates a chained list of storage structures taking into account the reception of this new data segment.

Before receiving the new data segment 703, a chained list of storage structures 41, 42 and 43 represent the reception window. An existing GoS#0 is associated to the storage structure 42.

The new received data segment 703 can be concatenated at the beginning of the GoS#0. Then, the storage structure 42 is updated to take into account this new data segment 703. More precisely, the length field is updated to indicate the new length of the GoS#0 including the data segment 703, and the pointer to the data buffer of the first K-1 bytes is updated to point to a copy of the first K-1 bytes of the data segment 703.

The new data segment 703 can be transmitted to the upper layer, after concatenation with the first K-1 bytes pointed by the field 31 of the storage structure 42 in the part 701, meaning before updating storage structures.

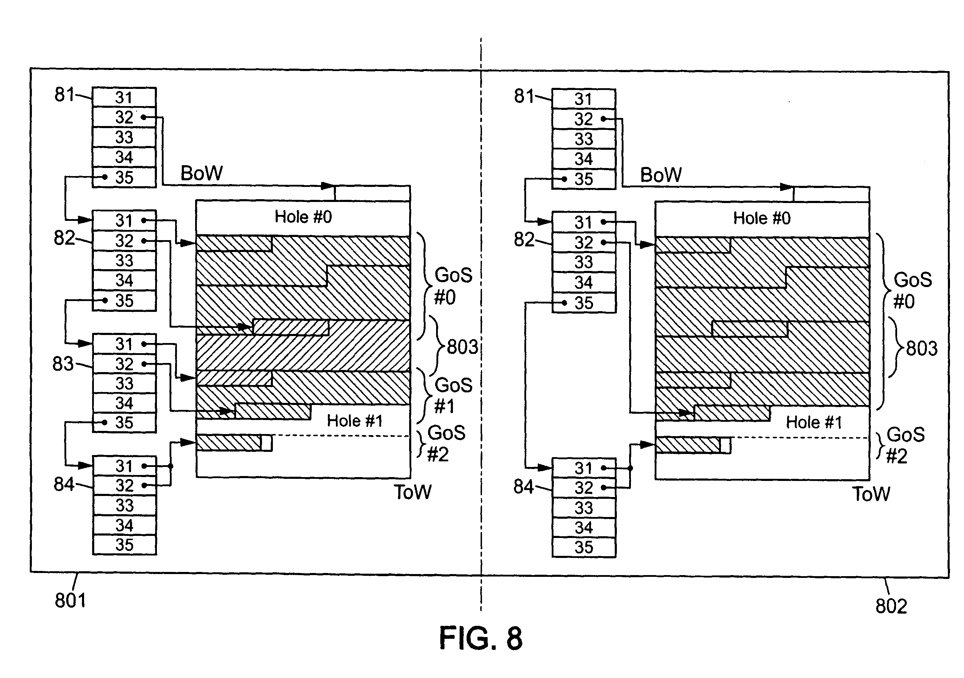

Figure 8 illustrates a reception of a new data segment which fills exactly a hole in the reception window. In this case, the new received data segment 803 can be concatenated in a GoS#0, which is represented by a storage structure 82 and in a GoS#1, which is represented by a storage structure 83.

The new data segment 803 is concatenated with the first K-1 bytes pointed by the field 31 of the storage structure 83, and with the last K-1 bytes pointed by the field 31 of the storage structure 82, before transmitting concatenated result to the upper layer.

Moreover, as illustrated in the part 802, the chained list of storage structures is updated. More precisely, a GoS can be removed, because the GoS#0 and the GoS#1 can be linked together through the new received data segment 803. Then, the storage structure 83 can disappear and the storage structure 82 is updated accordingly to represent the new GoS#0 including the old GoS#0, GoS#1 and the new received data segment 803.

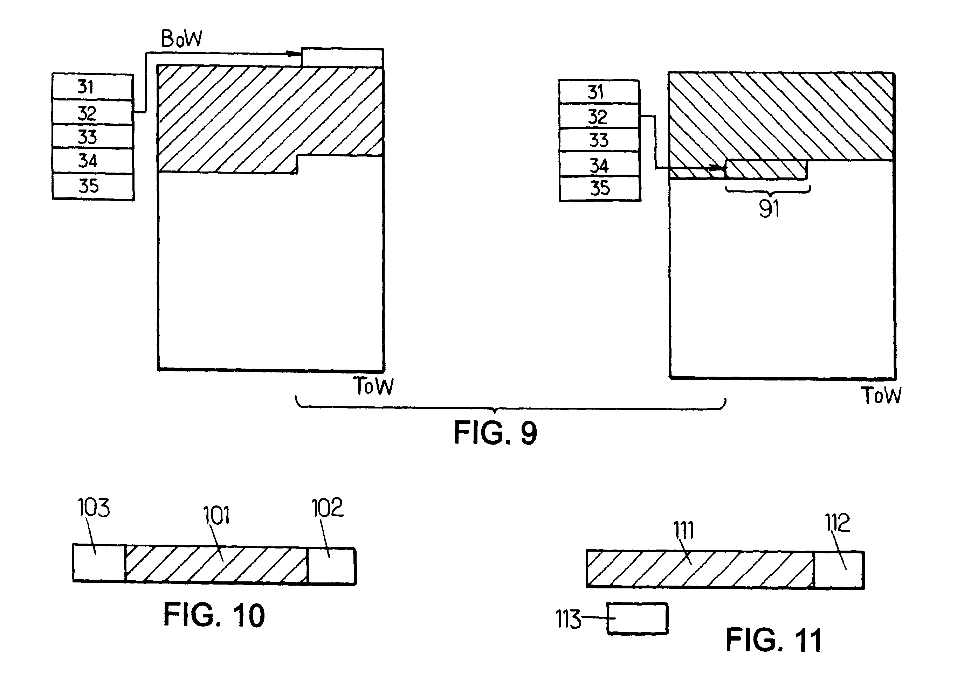

When a new received data segment allows filling the upper part of the reception window, the reception window can be shifted. Figure 9 illustrates this case. Last K-1 bytes 91 of the last group of segments of the previous reception window are kept in memory.

Figure 10 illustrates the data transmitted to the upper layer according to one embodiment of the present invention.

A part 101 corresponds to the new received data segment, a part 103 corresponds to the K-1 last bytes of the previous data segment, if already received, and a part 102 corresponds to the K-1 first bytes of the next data segment, if already received.

In order to reduce the memory requirement and accelerate the matching process applied at the upper layer, the next sections describe an optimization of the mechanism.

When the upper layer is in charge of applying a pattern matching algorithm, a state vector value of this algorithm can be memorized each time new data segment is received. It can correspond to a current state of a DFA (for 'Deterministic Finite Automata') like Aho Corasick for instance, or a bit-map encoded state vector value which stores the context of a NFA (for 'Non Deterministic Finite Automata '), when the matching algorithm is stopped at the end of a current analysis.

In one embodiment of the present invention, instead of keeping directly a copy of the last K-1 bytes of a received data segment, the state vector value of pattern matching algorithm is advantageously memorized. More precisely, when a data segment is transmitted to the upper layer, the upper layer applies its pattern matching algorithm and obtains a new state vector value. This new state vector value is then transmitted to the lower layer in order to make it able to store this state vector value in association with the data segment just transmitted before, when the next data segment is not yet received, as a specific information associated with this data segment according to one embodiment of the present invention.

In this case, there is no need to keep a copy of the last K-1 bytes of the segments. Only the first K-1 bytes of a received data segment can be memorized, to allow detection of overlapping patterns. The state machine can then continue from its current state upon reception of a new data segment.

Firstly, this optimization can allow saving memory space. Indeed, memory space required to store a state vector value may be generally smaller than the memory space required to store K-1 bytes. Secondly, it avoids parsing two times the end of a received data segment (K-1 last bytes), when a new data segment can be concatenated to another one which is already received, and then already transmitted to the upper layer. Storing a state vector value makes the parsing algorithm able to start with the stored state vector value. Consequently, the analysis can advantageously continue from this start point.

This allows performing analysis as fast as if it was performed after a complete re-assembly according to a prior art. This embodiment is particularly interesting when most of the data segments are received in order.

Depending on the case, the content analysis at the upper layer can be performed either on the current data segment, when the next data segment is not yet received, or on a concatenation of the current data segment with the first K-1 bytes of next data segment, when this last one is already received.

According to this embodiment, the storage structure includes a field to store a state vector value instead of storing a pointer to a data buffer storing the K-1 last bytes of the group of segments. This state vector field may be either directly a state vector value or a pointer to a copy of a state vector value, depending on vector's size for instance.

Figure 11 illustrates the data transmitted to the upper layer according to such an embodiment.

A part 111 corresponds to a new received data segment, a part 112 corresponds to the first K-1 bytes of the next data segment, and a part 113 corresponds to the specific information relative to the previous data segment, which is, in this context, a state vector value.

Memory space can be then saved because no complete re-assembly is performed. The reception window can be bounded by a bottom of window and a top of window variables that specify the range of allowed sequence numbers that can be received.

For each storage structure, only a small data buffer is required to store the K-1 first bytes of a group of segments;, or alternatively to store the current state vector value of a pattern matching algorithm.

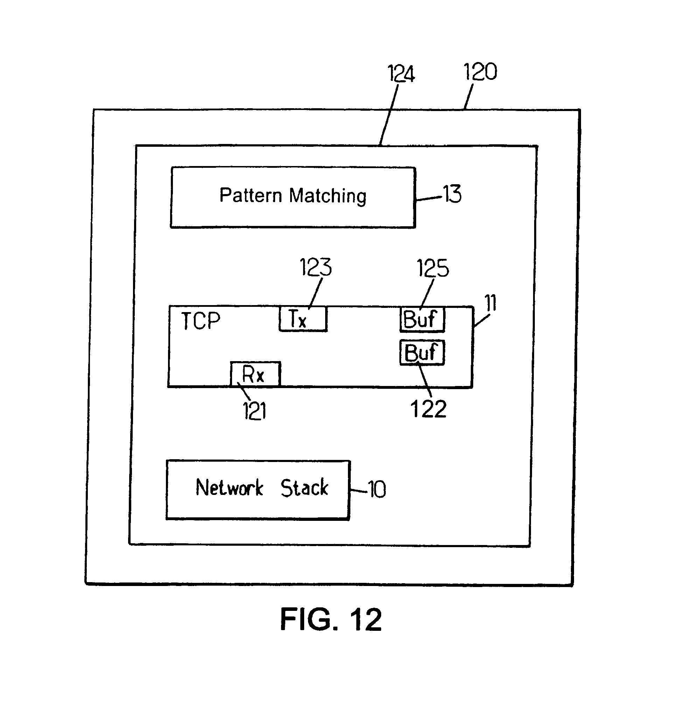

Figure 12 illustrates a terminal including a protocol stack according to one embodiment of the present invention.

A terminal 120 is adapted to received data from a network; a content analysis is carried out on these received data. The terminal 120 includes a protocol stack 124 carrying out a method of transmitting received data segment.

The lower layer comprises:
- a receiver 121 adapted to receive a current data segment;
- a data buffer 122 adapted to store the first K-1 bytes of said current data segment in association with said current data segment; if the data segment preceding the current data segment is not yet received;
- a data buffer 125 adapted to store a specific information relative to the last K-1 bytes of said current data segment in association with said current data segment, if the data segment next to the current data segment is not yet received;
- a transmitter 123 adapted to transmit said current data segment to the upper layer;
wherein said current data segment is transmitted with the first K-1 bytes stored in association with the next data segment if already received and with said specific information stored in association with the preceding data segment if already received.

A pool of free storage structures and a pool of free data buffers can be defined during an initialization step. They are used to dynamically allocate and de-allocate memory resources required to handle connections. The size of these pools can be chosen for instance to allow handling a given number of connections with a given number of holes in a defined reception window.

According to one embodiment of the present invention, it is possible to check, a the lower layer, which can correspond to a TCP layer in a protocol stack, if a received data segment can fit in the reception window, meaning if it is not too large, or if it is located inside the considered reception window. It is possible to check if there are no overlapping segments. If an anomaly is detected, an error can be reported and further processing may be cancelled.

In some conditions, it is required to check if a particular string is present at a given offset, or to identify a string located at a given offset. In this case, only a part of the received data segment could be interesting. This part can be specified by a starting sequence number and by a length value. According to one embodiment, it is very easy to perform such application by specifying the location in the reception window which is interesting. For that purpose, it is possible to transmit an information relative to the location in the reception window which can be a sequence number from the lower layer to the upper layer.

One embodiment of the present invention can advantageously take place, for instance, in gateways that forward traffic to hosts belonging to a private network.

The upper layer can carry out for instance application requiring content analysis, like virus scanning, traffic anomaly detection, QoS applications, or traffic analysis. As the present method requires less memory space, the attacks based on opening a lot of TCP connections, for instance, are less efficient, advantageously. Consequently, this method allows increasing the protection against some attacks.

Identification of protocols is a classical application that requires analyzing parts of packets. It is possible for instance, in protocols like SIP or HTTP, to extract some interesting fields, like method name, headers, or to perform delimitation of messages. This kind of processing is requested when implementing a probe to perform monitoring of SSL transactions (for 'Secure Socket Layer'). Start and end of SSL negotiating phase is not secured, because packet content is not encrypted, and can be identified by looking for a given byte pattern. As that byte pattern is short compared to a complete payload and its localisation is well-known, it is not necessary to examine the complete payload, neither to store it. Carrying out a method according to one embodiment of the present invention allow reducing memory requirement, and making a terminal more robust against exhaustion resource attacks.

It can be very advantageous to carry out a method according to one embodiment of the present invention in a TCP 'snooper' module that can be located in an IDS/IPS or in any equipment that requires performing some packet controlling without reconstructing the whole payload. Such equipment might, for instance, perform monitoring of network connections with identification of protocols by payload inspection, while requiring less memory space compared to a traditional solution that would perform flow reassembly.

It is also advantageous to apply such a method to IP defragmentation when segmentation is not supported by the transport layer re-assembly (for UDP for instance). In this case, reception window can correspond to the length of an IP datagram, which is generally much smaller than a classical window size. Fragments are very similar to segments. Instead of sequence numbers, an offset can be used to specify a start's location of a fragment inside the IP datagram.

## Claims

1. Method of transmitting received data segments from a lower layer (11) to an upper layer (13) in a protocol stack, data segments being respectively associated to sequence numbers ordering them;
said upper layer being adapted to handle K consecutive bytes of data; K being a positive integer;
said method comprising the next steps:
/a/ receiving (21) a current data segment at the lower layer,
**characterized in that** the method further comprises:
/b/ if the data segment preceding the current data segment is not yet received, storing (22) in memory the first K-1 bytes of said current data segment in association with said current data segment; and
if the data segment next to the current data segment is not yet received, storing a specific information relative to the last K-1 bytes of said current data segment in association with said current data segment;
/c/ transmitting (23) said current data segment to the upper layer;
wherein said current data segment is transmitted with the first K-1 bytes stored in association with the next data segment when it was received, if already received, and with specific information stored in association with the preceding data segment when it was received, if already received.

2. Method of transmitting received data segments according to claim 1, wherein, at step /b/, the specific information relative to the last K-1 bytes of one data segment corresponds to the last K-1 bytes of said data segment.

3. Method of transmitting received data segment according to claim 2, wherein, to store the first and the last K-1 bytes of the current data segment, a storage structure is created upon detection of a group of data segment(s) between two missing data segments;
said storage structure comprising:
- a field (31) indicating a pointer to a data buffer storing the K-1 first bytes of the group of segments;
- a field (32) indicating a pointer to a data buffer storing the K-1 last bytes of the group of segments;
- a field (33) indicating a sequence number of the first byte of said group of segment(s);
- a field (34) indicating a length value of the group of segment(s); and
- a field (35) indicating a pointer to a next storage structure corresponding to a next group of segment(s).

4. Method of transmitting received data segment according to claim 3, wherein a reception window of the lower layer is indicated through a chained list of the storage structures, a storage structure being associated to a group of segment(s).

5. Method of transmitting received data segment according to claim 4, wherein the storage structures in the chained list are updated upon reception of each data segment.

6. Method of transmitting received data segment according to claim 4 or 5, wherein, if a new received data segment is located just before or after a group of segment(s), the storage structure of said group of segment(s) is updated.

7. Method of transmitting received data segment according to claim 1, the upper layer carrying out a pattern matching algorithm based on a state vector of deterministic or non deterministic finite automata, wherein the specific information is a state vector value, which is received at the lower layer from the upper layer.

8. Method of transmitting received data segment according to claim 7, wherein a storage structure is created upon detection of a group of data segment(s) between two missing data segments;
said storage structure comprising:
- a field (31) indicating a pointer to a data buffer storing the K-1 first bytes of the group of segments;
- a field indicating a state vector value of the automata in association with said group of segments;
- a field (33) indicating a sequence number of the first byte of said group of segment(s);
- a field (34) indicating a length value of the group of segment(s); and
- a field (35) indicating a pointer to a next storage structure corresponding to a next group of segment(s).

9. Method of transmitting received data segment according to any one of preceding claims, wherein, at step /c/, the sequence number of the current data segment is further transmitted to the upper layer.

10. Terminal (120) adapted to receive data through a transmission network, said terminal comprising a protocol stack (124) comprising a lower layer (11) and an upper layer (13), said lower layer being adapted to transmit received data segments to said upper layer, data segments being respectively associated to sequence numbers ordering them;
said upper layer being adapted to handle K consecutive bytes of data; K being a positive integer;
said lower layer comprising:
- a receiver (121) adapted to receive a current data segment at the lower layer, **characterized in that** the terminal further comprises:
- a data buffer (122) adapted to store the first K-1 bytes of said current data segment in association with said current data segment, if the data segment preceding the current data segment is not yet received;
- a data buffer (125) adapted to store a specific information relative to the last K-1 bytes of said current data segment in association with said current data segment, if the data segment next to the current data segment is not yet received;
- a transmitter (123) adapted to transmit said current data segment to the upper layer;
wherein said current data segment is transmitted with the first K-1 bytes stored in association with the next data segment when it was received, if already received and with specific information stored in association with the preceding data segment when it was received, if already received.

11. Terminal according to claim 10, wherein the specific information relative to the last K-1 bytes of one data segment corresponds to the last K-1 bytes of said data segment.

12. Terminal according to claim 10, wherein the upper layer (13) carrying out a pattern matching algorithm based on a state vector of deterministic or non deterministic finite automata, wherein the specific information is a state vector value, which is received at the lower layer from the upper layer.

## Patentansprüche

1. Verfahren zum Übertragen von empfangenen Datensegmenten aus einer unteren Schicht (11) an eine obere Schicht (13) in einem Protokollstapel, wobei die Datensegmente jeweils mit sie ordnenden Sequenznummern assoziiert sind;
wobei die obere Schicht dafür ausgelegt ist, K aufeinander folgende Bytes an Daten zu handhaben; wobei K eine positive Ganzzahl ist;
wobei das Verfahren die nächsten Schritte umfasst:
/a/ Empfangen (21) eines aktuellen Datensegments an einer unteren Schicht,
**dadurch gekennzeichnet, dass** das Verfahren weiter umfasst:
/b) falls das dem aktuellen Datensegment vorhergehende Datensegment noch nicht empfangen worden ist, Speichern (22) die ersten K-1 Bytes des aktuellen Datensegments in Assoziierung mit dem aktuellen Datensegment, im Speicher; und
falls das zum aktuellen Datensegment nächste Datensegment noch nicht empfangen worden ist, Speichern einer spezifischen Information bezüglich der letzten K-1 Bytes des aktuellen Datensegments in Assoziierung mit dem aktuellen Datensegment;
/c/ Übertragen (23) des aktuellen Datensegments an die obere Schicht;
wobei das aktuelle Datensegment mit den in Assoziierung mit dem nächsten Datensegment, wenn es empfangen wurde, gespeicherten K-1 Bytes gesendet wird, falls bereits empfangen, und mit spezifischen Informationen, die in Assoziierung mit dem vorhergehenden Datensegment gespeichert wurden, wenn es empfangen wurde, falls bereits empfangen.

2. Verfahren zum Übertragen empfangener Datensegmente gemäß Anspruch 1, wobei in Schritt /b/ die spezifische Information bezüglich der letzten K-1 Bytes eines Datensegments den letzten K-1 Bytes des Datensegments entspricht.

3. Verfahren zum Übertragen empfangener Datensegmente gemäß Anspruch 2, wobei, um die ersten und letzten K-1 Bytes des aktuellen Datensegments zu speichern, beim Detektieren einer Gruppe von Datensegmenten zwischen zwei fehlenden Datensegmenten eine Speicherstruktur erzeugt wird;
wobei die Speicherstruktur umfasst:
- ein Feld (31), das einen Verweis auf einen Datenpuffer anzeigt, der die K-1 ersten Bytes der Gruppe von Segmenten speichert;
- ein Feld (32), das einen Verweis auf einen Datenpuffer anzeigt, der die K-1 letzten Bytes der Gruppe von Segmenten speichert;
- ein Feld (33), das eine Sequenznummer des ersten Bytes der Gruppe von Segmenten anzeigt;
- ein Feld (34), das einen Längenwert der Gruppe von Segmenten anzeigt; und
- ein Feld (35), das einen Verweis auf eine nächste Speicherstruktur anzeigt, die einer nächsten Gruppe von Segmenten entspricht.

4. Verfahren zum Übertragen empfangener Datensegmente gemäß Anspruch 3, wobei ein Empfangsfenster der unteren Schicht durch eine verkettete Liste der Speicherstrukturen angezeigt wird, wobei eine Speicherstruktur mit einer Gruppe von Segmenten assoziiert ist.

5. Verfahren zum Übertragen empfangener Datensegmente gemäß Anspruch 4, wobei die Speicherstrukturen in der verketteten Liste beim Empfang jedes Datensegments aktualisiert werden.

6. Verfahren zum Übertragen empfangener Datensegmente gemäß Anspruch 4 oder 5, wobei, falls ein neues empfangenes Datensegment direkt vor oder nach einer Gruppe von Segmenten lokalisiert ist, die Speicherstruktur der Gruppe von Segmenten aktualisiert wird.

7. Verfahren zum Übertragen empfangener Datensegmente gemäß Anspruch 1, wobei die obere Schicht einen Musterpassungs-Algorithmus ausführt, basierend auf einem Zustandsvektor von deterministischen oder nicht-deterministischen endlichen Automaten, wobei die spezifische Information ein Zustandsvektorwert aus der oberen Schicht ist, der an der unteren Schicht empfangen wird.

8. Verfahren zum Übertragen empfangener Datensegmente gemäß Anspruch 7, wobei eine Speicherstruktur beim Detektieren einer Gruppe von Datensegmenten zwischen zwei fehlenden Datensegmenten erzeugt wird;
wobei die Speicherstruktur umfasst:
- ein Feld (31), das einen Verweis auf einen Datenpuffer anzeigt, der die K-1 ersten Bytes der Gruppe von Segmenten speichert;
- ein Feld, das einen Zustandsvektorwert der Automaten in Assoziierung mit der Gruppe von Segmenten anzeigt.
- ein Feld (33), das eine Sequenznummer des ersten Bytes der Gruppe von Segmenten anzeigt;
- ein Feld (34), das einen Längenwert der Gruppe von Segmenten anzeigt; und
- ein Feld (35), das einen Verweis auf eine nächste Speicherstruktur anzeigt, die einer nächsten Gruppe von Segmenten entspricht.

9. Verfahren zum Übertragen empfangener Datensegmente gemäß einem der vorstehenden Ansprüche, wobei in Schritt /c/weiter die Sequenznummer des aktuellen Datensegments an die obere Schicht übertragen wird.

10. Endgerät (120), das dafür ausgelegt ist, Daten über ein Übertragungsnetzwerk zu empfangen, wobei das Endgerät einen Protokollstapel (124) umfasst, der eine untere Schicht (11) und eine obere Schicht (13) umfasst, wobei die untere Schicht dafür ausgelegt ist, empfangene Datensegmente an die obere Schicht zu übertragen, wobei die Datensegmente jeweils mit sie ordnenden Sequenznummern assoziiert sind;
wobei die obere Schicht dafür ausgelegt ist, K aufeinander folgende Bytes an Daten zu handhaben, wobei K eine positive Ganzzahl ist;
wobei die untere Schicht umfasst:
- einen Empfänger (121), der dafür ausgelegt ist, ein aktuelles Datensegment an der unteren Schicht zu empfangen,
**dadurch gekennzeichnet, dass** das Endgerät weiter umfasst:
- einen Datenpuffer (122), der dafür ausgelegt ist, die ersten K-1 Bytes des aktuellen Datensegments in Assoziierung mit dem aktuellen Datensegment zu speichern, falls das dem aktuellen Datensegment vorhergehende Datensegment noch nicht empfangen worden ist;
- einen Datenpuffer (125), der dafür ausgelegt ist, eine spezifische Information bezüglich der letzten K-1 Bytes des aktuellen Datensegments in Assoziierung mit dem aktuellen Datensegment zu speichern, falls das nächste Datensegment nach dem aktuellen Datensegment noch nicht empfangen worden ist;
- einen Sender (123), der dafür ausgelegt ist, das aktuelle Datensegment an die obere Schicht zu übertragen;
wobei das aktuelle Datensegment mit den in Assoziierung mit dem nächsten Datensegment gespeicherten ersten K-1 Bytes gesendet wird, wenn es empfangen worden ist, falls bereits empfangen, und mit spezifischen Informationen, die in Assoziierung mit dem vorherigen Datensegment gespeichert sind, wenn es empfangen worden ist, falls bereits empfangen.

11. Endgerät gemäß Anspruch 10, wobei die spezifische Information bezüglich der letzten K-1 Bytes eines Datensegments den letzten K-1 Bytes des Datensegments entspricht.

12. Endgerät gemäß Anspruch 10, wobei die obere Schicht (13), einen Musterpassungs-Algorithmus, basierend auf einem Zustandsvektor, von deterministischen oder nicht-deterministischen endlichen Automaten ausführt, wobei die spezifische Information ein Zustandsvektorwert aus der oberen Schicht ist, der an der unteren Schicht empfangen wird.

## Revendications

1. Procédé de transmission de segments de données reçus d'une couche inférieure (11) à une couche supérieure (13) dans une pile de protocoles, les segments de données étant respectivement associés à des numéros de séquence assurant leur classement;
ladite couche supérieure étant adaptée pour gérer K octets de données consécutifs ; K étant un entier positif ;
ledit procédé comprenant l'étape suivante:
a) recevoir (21) un segment de données actuel au niveau de la couche inférieure,
**caractérisé en ce que** le procédé comprend en outre :
b) si le segment de données précédant le segment de données actuel n'a pas encore été reçu, stocker (22) en mémoire les K-1 premiers octets dudit segment de données actuel en association avec ledit segment de données actuel ; et
si le segment de données suivant le segment de données actuel n'a pas encore été reçu, stocker une information spécifique concernant les K-1 derniers octets dudit segment de données actuel en association avec ledit segment de données actuel ;
c) transmettre (23) ledit segment de données actuel à destination de la couche supérieure;
dans lequel ledit segment de données actuel est transmis avec les K-1 premiers octets stockés en association avec le segment de données suivant lorsqu'il avait été reçu, s'il a déjà été reçu, et avec des informations spécifiques stockées en association avec le segment de données précédent lorsqu'il avait été reçu, s'il a déjà été reçu.

2. Procédé de transmission de segments de données reçus selon la revendication 1, dans lequel, à l'étape b), les informations spécifiques concernant les K-1 derniers octets d'un segment de données correspondent aux K-1 derniers octets dudit segment de données.

3. Procédé de transmission de segments de données reçus selon la revendication 2, dans lequel, pour stocker les K-1 premiers et derniers octets du segment de données actuel, une structure de stockage est créée suite à la détection d'un groupe de segment(s) de données entre deux segments de données manquants;
ladite structure de stockage comprenant :
- un champ (31) indiquant un pointeur vers un tampon de données stockant les K-1 premiers octets du groupe de segments;
- un champ (32) indiquant un pointeur vers un tampon de données stockant les K-1 derniers octets du groupe de segments;
- un champ (33) indiquant un numéro de séquence du premier octet dudit groupe de segment(s) ;
- un champ (34) indiquant une valeur de longueur du groupe de segment(s) ; et
- un champ (35) indiquant un pointeur vers une structure de stockage suivante correspondant à un groupe de segment(s) suivant.

4. Procédé de transmission de segments de données reçus selon la revendication 3, dans lequel une fenêtre de réception de la couche inférieure est indiquée par une liste chaînée des structures de stockage, une structure de stockage étant associée à un groupe de segment(s).

5. Procédé de transmission de segments de données reçus selon la revendication 4, dans lequel les structures de stockage sur la liste chaînée sont mises à jour à réception de chaque segment de données.

6. Procédé de transmission de segments de données reçus selon la revendication 4 ou 5, dans lequel, si un nouveau segment de données reçu se trouve juste avant ou après un groupe de segment(s), la structure de stockage dudit groupe de segment(s) est mise à jour.

7. Procédé de transmission de segments de données reçus selon la revendication 1, la couche supérieure exécutant un algorithme d'appariement de formes sur la base d'un vecteur d'état d'automates finis déterministes ou non déterministes, dans lequel les informations spécifiques sont une valeur de vecteur d'état qui est reçue au niveau de la couche inférieure à partir de la couche supérieure.

8. Procédé de transmission de segments de données reçus selon la revendication 7, dans lequel une structure de stockage est créée suite à la détection d'un groupe de segment(s) de données entre deux segments de données manquants ;
ladite structure de stockage comprenant :
- un champ (31) indiquant un pointeur vers un tampon de données stockant les K-1 premiers octets du groupe de segments;
- un champ indiquant une valeur de vecteur d'état des automates en association avec ledit groupe de segments;
- un champ (33) indiquant un numéro de séquence du premier octet dudit groupe de segment(s) ;
- un champ (34) indiquant une valeur de longueur du groupe de segment(s) ; et
- un champ (35) indiquant un pointeur vers une structure de stockage suivante correspondant à un groupe de segment(s) suivant.

9. Procédé de transmission de segments de données reçus selon l'une quelconque des revendications précédentes, dans lequel, à l'étape c), le numéro de séquence du segment de données actuel est en outre transmis à destination de la couche supérieure.

10. Terminal (120), adapté pour recevoir des données à travers un réseau de transmission, ledit terminal comprenant une pile de protocoles (124) comprenant une couche inférieure (11) et une couche supérieure (13), ladite couche inférieure étant adaptée pour transmettre des segments de données reçus à destination de ladite couche supérieure, les segments de données étant respectivement associés à des numéros de séquence assurant leur classement ;
ladite couche supérieure étant adaptée pour gérer K octets de données consécutifs ; K étant un entier positif ;
ladite couche inférieure comprenant :
- un récepteur (121) adapté pour recevoir un segment de données actuel au niveau de la couche inférieure,
**caractérisé en ce que** le terminal comprend en outre :
- un tampon de données (122) adapté pour stocker les K-1 premiers octets dudit segment de données actuel en association avec ledit segment de données, si le segment de données précédent le segment de données actuel n'a pas encore été reçu;
- un tampon de données (125) adapté pour stocker une information spécifique concernant les K-1 derniers octets dudit segment de données actuel en association avec ledit segment de données actuel, si le segment de données suivant le segment de données actuel n'a pas encore été reçu ;
- un transmetteur (123) adapté pour transmettre ledit segment de données actuel à destination de la couche supérieure;
dans lequel ledit segment de données actuel est transmis avec les K-1 premiers octets stockés en association avec le segment de données suivant lorsqu'il avait été reçu, s'il a déjà été reçu, et avec des informations spécifiques stockées en association avec le segment de données précédent lorsqu'il avait été reçu, s'il a déjà été reçu.

11. Terminal selon la revendication 10, dans lequel les informations spécifiques concernant les K-1 derniers octets d'un segment de données correspondent aux K-1 derniers octets dudit segment de données.

12. Terminal selon la revendication 10, dans lequel la couche supérieure (13) exécute un algorithme d'appariement de formes sur la base d'un vecteur d'état d'automates finis déterministes ou non déterministes, dans lequel les informations spécifiques sont une valeur de vecteur d'état qui est reçue au niveau de la couche inférieure à partir de la couche supérieure.
